# EUROPEAN PATENT SPECIFICATION

(11) **EP 3 952 229 B1**
(45) Date of publication and mention of the grant of the patent: **01.11.2023**
(21) Application number: 20861913.0
(22) Date of filing: 02.09.2020
(51) Int. Cl.: H04L 51/214, H04L 51/58, H04L 51/222

(54) **METHOD FOR SENDING RCS SERVICE MESSAGE, DEVICE, CLIENT, AND SERVER**
VERFAHREN ZUM SENDEN VON RCS-DIENSTNACHRICHTEN, VORRICHTUNG, CLIENT UND SERVER
PROCÉDÉ D'ENVOI DE MESSAGE DE SERVICE RCS, DISPOSITIF, CLIENT ET SERVEUR

(30) Priority: 02.09.2019 CN 201910823551
(43) Date of publication of application: 09.02.2022
(73) Proprietor: ZTE Corporation, Shenzhen, Guangdong 518057 (CN)
(72) Inventor: WANG,Guocai, Guangdong 518057 (CN); LIU, Weizhao, Guangdong 518057 (CN)
(74) Representative: Novagraaf Technologies
(86) International application number: PCT/CN2020/113081
(87) International publication number: WO 2021/043176

(56) References cited:
- CN-A- 103 139 703
- CN-A- 103 347 046
- CN-A- 106 332 230
- CN-A- 107 682 194
- CN-A- 109 218 797
- US-A1- 2011 087 430
- US-A1- 2017 374 504
- "GSM Association -Rich Communication Suite 5.1 Advanced Communications Services and Client Specification - Version 2.0 -pages 1-250", 3GPP, 3 May 2013 (2013-05-03), pages 1-250, XP055131358,
- "GSM Association -Rich Communication Suite 5.1 Advanced Communications Services and Client Specification - Version 2.0 -pages 251-482", , 3 May 2013 (2013-05-03), XP055131363, Retrieved from the Internet: URL:www.3gpp.com [retrieved on 2014-07-24]

## Description

### Technical Field

The present disclosure relates to, but is not limited to, a method and a device for sending a Rich Communication Suite (RCS) service message, an RCS client, an RCS Application Server (AS), and a computer-readable storage medium.

### Background

RCS, i.e. Rich Communication Suite, refers to directly integrating three main entries of "call", "message" and "contacts" in a mobile phone with the mobile phone itself from the level of an operator so as to form new call, new message and new contacts. The RCS solution is an Internet-oriented Information and Communication Technology (ICT) convergence communication service. Different from interconnection and intercommunication at a network level, the RCS solution is convergence and coordination at an application level based on the requirements and needs from users, and is a service formed by the integration of a higher level of concept and new generation of communication and information technologies (IT).

In the RCS service, group chat and official account are the most widely applied service types. In the two types of services, an RCS service message (e.g., text, image, audio, video, and the like) sent by a user or an official account is directly delivered to all contacts in the group or all users following the official account, which increases the pressure on network traffic and various related system performance. Moreover, when such a solution is adopted, a requirement for precise distribution cannot be met, especially for official account applications which have an important and essential requirement on delivery accuracy. The related document (US2017/374504A1) discloses a geolocation compatibility for NON-RCS devices.

### Summary

The invention describes a method for rich communication suite, RCS, service message according to claims 1 and 6, and corresponding apparatus , according to claims 10 and 11, and corresponding client and server, according to claims 12 and 13 and finally corresponding computer-readable medium according to claim 14.

Additional aspects of the invention are described in the dependent claims.

Other aspects will become apparent upon reading and understanding the drawings and detailed description.

### Brief Description of the Drawings

Fig. 1 is a flowchart of a method (applied to an RCS client) for sending an RCS service message according to some embodiments of the present disclosure;
Fig. 2 is a flowchart of a method (applied to an RCS AS) for sending an RCS service message according to some embodiments of the present disclosure;
Fig. 3 is a flowchart of operation 202 according to some embodiments of the present disclosure;
Fig. 4 is a schematic diagram for reporting geographical location information in an application example of the present disclosure;
Fig. 5 is a schematic diagram of a message flow of an application example of the present disclosure;
Fig. 6 is a schematic diagram of a service flow of an application example of the present disclosure;
Fig. 7 is a schematic diagram of a device (applied to an RCS client) for sending an RCS service message according to some embodiments of the present disclosure;
Fig. 8 is a schematic diagram of a device (applied to an RCS AS) for sending an RCS service message according to some embodiments of the present disclosure.

### Detailed Description

The embodiments of the present disclosure will be described in detail with reference to the accompanying drawings hereinafter.

Operations shown in the flowcharts of the figures may be performed in a computer system such as a set of computer-executable instructions. Furthermore, although a logic sequence is shown in the flowcharts, in some cases, the shown or described operations may be executed in a sequence different from that described here.

In the present disclosure, precise distribution of an RCS message is implemented based on first information which is reported by an RCS client and used for defining a pushing range of an RCS service message, thereby saving costs of an RCS system and reducing redundant information of the system.

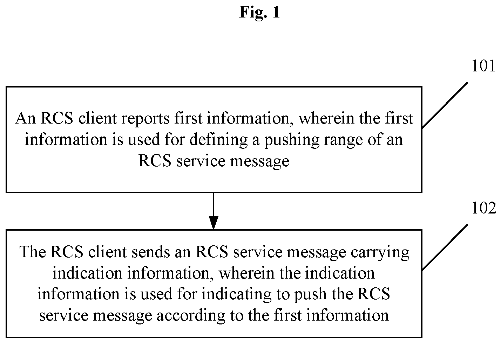

As shown in Fig. 1, the method for sending an RCS service message in the embodiments of the present disclosure is applied to an RCS client, and the method includes operations 101 and 102.

At operation 101, an RCS client reports first information, where the first information is used for defining a pushing range of an RCS service message.

The first information may include information such as geographical location information, registration time, or consumption record.

The RCS service message may be a group chat message or an official account message.

In some cases, before operation 101, the method may further include an operation that the RCS client periodically acquires the first information of the RCS client.

For example, the first information may be refreshed hourly.

In some cases, in a case where the first information is geographical location information, the RCS client periodically acquires longitude and latitude data of the RCS client, and converts the longitude and latitude data into the geographical location information in a decimal format.

The geographical location information may be reported in the form of longitude and latitude. For example, the format of longitude and latitude adopts a decimal form of ddd.ddddddddd, such as 39.723890912°. If the format of the longitude and latitude acquired by the RCS client from the terminal is not the required format, the RCS client can provide a longitude and latitude format conversion function. The use of this format facilitates the calculation of a location range of the message receivers.

In some cases, operation 101 includes: in a case where the RCS client determines that a switch for reporting the first information has been turned on, the RCS client periodically reports the first information to an address book.

In consideration of user privacy, a switch for reporting the first information is added in the RCS client.

The function of reporting address book information already possessed by the RCS client may be extended, and the report content field and the first information field may be extended.

At operation 102, the RCS client sends an RCS service message carrying indication information, wherein the indication information is used for indicating to push the RCS service message according to the first information.

In some cases, in a case of determining that an option of pushing the RCS service message according to the first information has been activated, the RCS client sends the RCS service message carrying the indication information to the RCS AS.

An option for whether to add first information when sending a message (an option of pushing the RCS service message according to the first information) may be added in the RCS client. In consideration of user privacy, the option may be set to be valid only when a switch for reporting the first information is turned on, and selecting this option means that the user enables the method provided in the embodiments of the disclosure.

In the present disclosure, interfaces of respective network elements involved in reporting the address book are all first information extension fields. A terminal reports personal user information, such as a geographical location of the terminal, via the address book, and the address book stores the information in a Dcache, in which a key value of the Dcache is a user number.

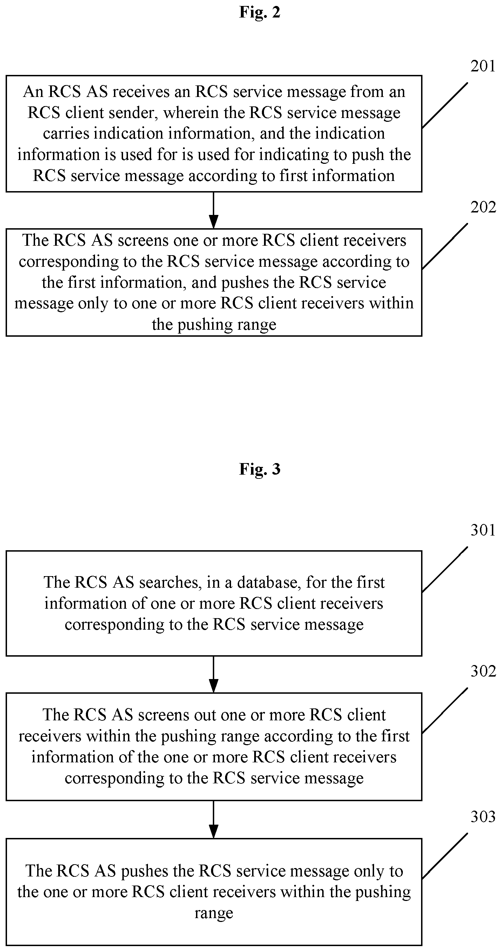

As shown in Fig. 2, the method for sending an RCS service message in the embodiments of the present disclosure is applied to an RCS AS, and the method includes operations 201 and 202.

At operation 201, an RCS AS receives an RCS service message from an RCS client sender, wherein the RCS service message carries indication information, the indication information is used for indicating to push the RCS service message according to first information, and the first information is used for defining a pushing range of the RCS service message.

In order to avoid confusion, the RCS client sending the RCS service message is referred to as an RCS client sender, and the RCS client receiving the RCS service message is referred to as an RCS client receiver.

The first information may include information such as geographical location information, registration time, or consumption record.

The RCS service message may be a group chat message or an official account message.

Taking the first information being the geographical location information and the RCS service message being a group chat message as an example, when a group member sends a message in the group, an option of the geographical location information can be attached in the message, an RCS AS network element parses the field and associates the field with a group ID, and this association is used for controlling a logic for subsequent distribution of the message.

After the group message is distributed to the RCS AS network element, the message is parsed, if the option of the geographical location information is not included in the message from the RCS client sender, the location information of other group members in the group is not queried, and the message is directly distributed to all the group members.

If the option of the geographical location information is attached in the message, the location information of the other group members in the group is queried.

At operation 202, the RCS AS screens, according to the first information, one or more RCS client receivers corresponding to the RCS service message, and pushes the RCS service message only to one or more RCS client receivers within the pushing range.

As shown in Fig. 3, in some embodiments, operation 202 includes operations 301 and 302.

At operation 301, the RCS AS searches, in a database, for first information of one or more RCS client receivers corresponding to the RCS service message.

The database may be the Dcache described above.

At operation 302, the RCS AS determines one or more RCS client receivers within the pushing range according to the first information of the one or more RCS client receivers corresponding to the RCS service message.

The RCS AS acquires the first information of the RCS client sender from the database, and determines the pushing range according to the first information of the RCS client sender and an error range.

For example, in a case where the first information is geographical location information, the pushing range may be determined by vertically and horizontally expanding the location information of the longitude and latitude of the RCS client sender by a numerical value, wherein the numerical value may be acquired according to the longitude and latitude of Beijing city. For example, whether the geographical location of the RCS client receiver meets the push requirement may be determined according to a pushing range formed by horizontally expanding the current longitude by 0.45 and vertically expanding the current latitude by 0.35.

At operation 303, the RCS AS pushes the RCS service message only to one or more RCS client receivers within the pushing range.

There are three possible cases which are described below.
1. If the first information of the RCS client receiver is not acquired, the message is not pushed to the RCS client receiver.
2. If the first information of the RCS client receiver is acquired, but the first information does not satisfy the pushing range, the message is not pushed to the RCS client receiver.
3. If the first information of the RCS client receiver is acquired, and the first information satisfies the pushing range, the message is pushed to the RCS client receiver.

The present disclosure proposes only slight change in the existing network elements in the current network, mainly including the field extension for the interfaces of the related gateways, the storage format extension for the Dcache storage network elements, the addition of the processing modules in the RCS client, and the change of interfaces of the RCS client.

The following description takes the first information being the geographical location information as an example.

In the present application example, collection, conversion and reporting of geographical location information are implemented by a relevant network element of an existing RCS system, and a group chat flow and an official account message pushing flow are optimized. The solution requires only slight change in the existing RCS related network element, and involves no hardware change, so that the implementation cost is relatively low, and it would be easy to apply this solution to an existing network system.

The application scenario of the present application example may be group chat in an RCS service. When a user sends an RCS message at a location, the user may choose to attach the current geographical location information in the RCS message. In this case, only contacts, which are located in a range of the geographical location, in the group can receive the RCS message, and other contacts cannot see the RCS message, thereby improving the reading value of the RCS message. Likewise, the solution is also applicable for pushing an official account message. For example, when an official account pushes a content directed to a certain region, the geographical location information of the location can be carried in the message, thereby realizing precise distribution of the message to information receivers.

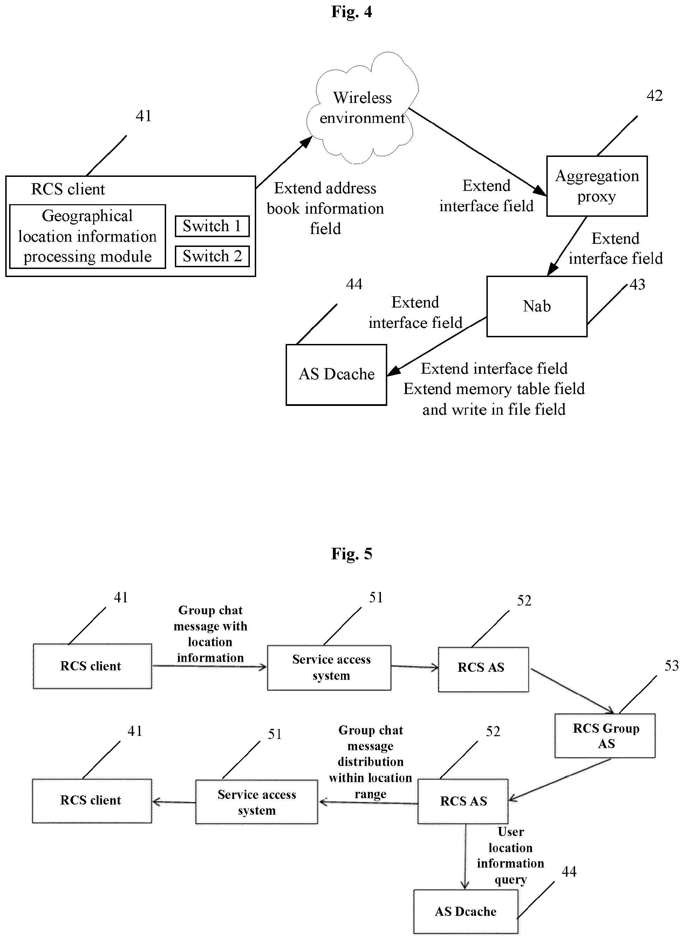

Fig. 4 is a schematic diagram for reporting geographical location information in an application example of the present disclosure. As shown in Fig. 4, an RCS client 41, an aggregation proxy 42, a Nab (Network address book) 43, and an AS Dcache 44 are included.

For the RCS client 41:
1) A geographical location information processing module is added, wherein the geographical location information processing module is configured to acquire current geographical location information of a user from a Global Positioning System (GPS) module of the terminal, convert the geographical location information into longitude and latitude data in a decimal format, periodically report longitude and latitude information of the geographical location, and provide geographical location information of the RCS client, which may be used in sending an RCS service message in the embodiments of the present disclosure.
2) A switch controlling whether to report the geographical location information periodically is added, wherein a default period is one hour. When the switch is turned on, the geographical location information of the user is allowed to be reported, and the geographical location information of the user can be queried when the user serves as an RCS service message receiver so as to determine whether to push the RCS service message;
3) An option controlling whether location information is attached when a message is sent is added, wherein if a user selects to activate the option when editing the message, it means that the RCS service message is pushed according to the geographical location information, that is, the message is pushed only to users satisfying the requirement defined by the geographical location information.
4) The interface for reporting address book information is extended. Since the RCS client already has the function of periodically reporting the address book information, the interface field of the function can be extended for carrying the geographical location information mentioned above, and the field is in a format of ddd.ddddddddd. The reporting flow is not changed.

All the above modifications can be implemented by software.

For the aggregation proxy 42:
In current networking, the function of the aggregation proxy 42 is only to transparently transmit and forward address book information of the RCS client 41. Therefore, fields of related interfaces existing in the aggregation proxy 42 may be extended, that is, the geographical location information field may be added, and such extension can be implemented by software.

For the Nab 43:
The existing interface between the Nab43 and the aggregation proxy 42 is extended to support the newly added geographical location information field. The interface between the Nab43 and the AS Dcache44 is extended to support writing address book information with newly added geographical location information into the AS Dcache44.

For the AS Dcache 44:
The AS DCache 44 is a memory database system, and has a function of writing memory data into a data file to implement data persistence storage. The memory of the DCache is also extended to support the geographical location information, and it is also needed to support writing the geographical location information into the file.

The message flow is described below by taking group chat as an example. As shown in Fig. 5, the system includes an RCS client 41, a service access system 51, an RCS AS 52, an RCS group AS53 and an AS Dcache 44. The RCS client 41 is configured to receive and send an RCS message. The service access system 51 is configured to route and forward a message to the RCS AS 52. The RCS AS 52 is a core module for RCS message logic processing and is configured to process all RCS service messages. When a certain group member in the group sends a group message, the RCS AS 52 is configured to judge whether to query in an AS Dcache for location information of other group members according to an option of whether location information is attached in the message sent by the sender, so as to judge whether to push the group chat message to the group members. The RCS group AS53 is configured to implement logic distribution of a group chat service.

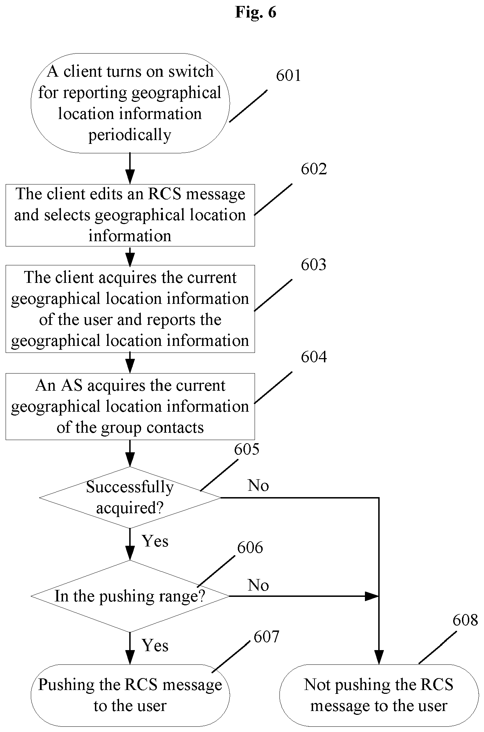

The main service flow involved in Fig. 5 is introduced below. As shown in Fig. 6, the method includes the following operations 601 to 608.

At operation 601, an RCS client turns on a switch for reporting geographical location information periodically, so that the RCS client reports longitude and latitude information in a decimal format to an RCS system periodically (for example, set to report the longitude and latitude information at an interval of one hour). The switch is set in consideration of user privacy. Not only the RCS message sender (corresponding to an RCS client sender) needs to turn on the switch, but also the receiver (corresponding to an RCS client receiver) needs to turn on the switch.

The newly added geographical location information processing module of the RCS client acquires geographical location information from the terminal, converts the geographical location information into longitude and latitude data in a decimal format, adds the geographical location information to existing address book information, and reports the longitude and latitude information to the RCS system by using an existing address book information reporting process.

The action is independent of an RCS message sending process, and the main purpose of this action is to enable location information of the user to be stored in an AS Dcache system and periodically updated.

At operation 602, the RCS client receives an RCS message (which may be a text, an image, audio and video, etc.) edited by an RCS message sender, and selects a geographical location information option, which means that the information of the user uses this function, that is, the RCS message is pushed only to users within a certain range of the geographical location.

At operation 603, after the user edits the RCS message and sends the RCS message, the RCS client re-acquires the current geographical location information of the user and converts the geographical location information into longitude and latitude data in a decimal format, reports the longitude and latitude data to the RCS system, and stores the longitude and latitude data into the AS Dcache through the Nab, thereby preparing for subsequent operations.

At operation 604, the RCS AS acquires, from the AS Dcache system, the geographical location information of the contacts, to which the RCS message is to be pushed, in the group, and acquires the geographical location information of the sender of the RCS message.

At operation 605, it is determined whether geographical location information of the contacts is acquired, if yes, operation 606 is performed, and if not, operation 608 is performed.

At operation 606, in a case where the geographical location information of a certain contact is acquired, it is determined whether the current geographical location information (longitude and latitude data) of the contact falls in a pushing range. In a case where the longitude data of the contact is within a range between positive or negative 0.45 plus the latitude data of the sender, and the latitude data of the contact is within a range between positive or negative 0.35 plus the latitude data of the sender, the current geographical location information of the contact can be determined to fall in the pushing range. If the current geographical location information of the contact is within the pushing range, operation 607 is performed, and if the current geographical location information of the contact is not within the pushing range, operation 608 is performed.

At operation 607, the current geographical location information of the contact is within the pushing range, the RCS message is pushed to the contact.

At operation 608, the current geographical location information of the contact is not within the pushing range, the RCS message is not pushed to the contact.

In this way, whether the RCS message can be pushed to respective contacts in the group is determined in sequence according to the described flow until the determination on all the contacts is completed, and then the group chat flow is completed.

If the geographical location information of a contact is not acquired, the RCS message is not pushed to the contact.

For pushing the official account content in the RCS service, the implementation principle and flow are basically consistent with the foregoing group chat flow.

It should be noted that, the present disclosure is not limited to the scenario that the first information is the geographical location information, and other type of information may also be used to implement application in other scenarios. For example, a public account may acquire a user consumption record and perform advertisement pushing for different targeted products. For another example, a group chat user may determine, according to the user's registration time, to push a message to a user that meets the registration time requirement, and so on. These scenarios relate to substantially the same change in terms of a network element, a module, an interface and function in the RCS system. The difference only lies in that the processing manners for acquiring and reporting information and the processing manners for the information by a client are different, and the application in difference scenarios follows actually the same technical solution.

Likewise, in the present disclosure, the idea of selecting target users to which the RCS message is precisely distributed may also be considered as a technical means applicable to various application scenarios. The users to which the RCS message is to be pushed can be precisely determined with the change of the longitude and latitude range, and for the registration time and consumption record of the user, an independent solution can also be used to determine the users to which the RCS message is to be pushed precisely. These methods for determining the users to which the RCS message is to be precisely distributed are similar, and are not described herein repeatedly.

In addition, information such as geographical location, registration time, consumption record, etc., all belong to privacy information of a user and need to be protected. The measures for protecting the geographical location information in the embodiments of the present disclosure are also applicable to protection of other private information.

It can be seen from the above analysis that, by means of the embodiments of the present disclosure, precise distribution of an RCS message can be implemented, so that the amount of unnecessary information is reduced, and the pressure on network traffic and on the performance of each network element of an RCS system can also be alleviated, which also reflects the current tendency of realizing a personalized service according to big data. Furthermore, the implementation of the embodiments of the present disclosure can be completely based on software and does not involve any hardware change, and therefore is easy to implement and is low in cost, making it easy to deploy such scheme in an existing network.

In addition, considering the development of the RCS service, the embodiments of the present disclosure may also be correspondingly applied to subsequent services. For example, for a popularized MAAP (Message As A Plat) service, a main scenario is that a robot accesses an RCS system as an independent system, which is similar to a public account. The user may follow the robot and perform message interaction with the robot. Thus, the embodiments of the present disclosure may also be applied to the MAAP service, for example, popularizing the food and esthetics of the region where the user is located to the user according to the location information, popularizing products of different prices to the user according to the consumption information of the user, and so on.

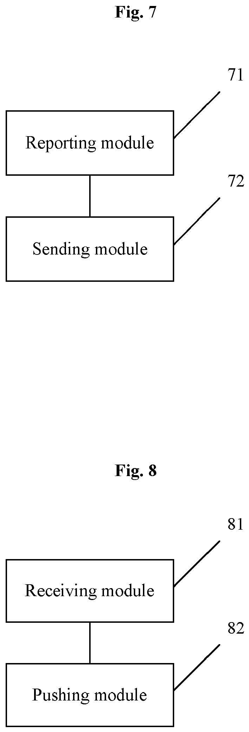

As shown in Fig. 7, the embodiments of the present disclosure provide a device for sending an RCS service message, which is applied to an RCS client and includes:
a reporting module 71, configured to report first information, wherein the first information is used for defining a pushing range of an RCS service message; and
a sending module 72, configured to send an RCS service message, where the RCS service message carries indication information, and the indication information is used for indicating to push the RCS service message according to the first information.

The first information includes at least one of the following: geographical location information, registration time and consumption record.

The RCS service message includes at least one of the following: a group chat message and an official account message.

The reporting module 71 is further configured to: periodically acquire the first information of the RCS client.

The first information includes geographical location information, and the reporting module 71 is configured to:
periodically acquire longitude and latitude data of the RCS client, and convert the longitude and latitude data into the geographical location information in a decimal format.

The reporting module 71 is configured to:
reporting the first information to an address book periodically in a case where it is determined that a switch for reporting the first information has been turned on.

The sending module 72 is configured to:
determine that an option of pushing the RCS service message according to the first information has been activated, and send the RCS service message carrying the indication information.

As shown in Fig. 8, the present disclosure provides a device for sending an RCS service message, including:
a receiving module 81, configured to receive an RCS service message from an RCS client sender, wherein the RCS service message carries indication information, the indication information is used for indicating to push the RCS service message according to first information, and the first information is used for defining a pushing range of the RCS service message; and
a pushing module 82, configured to screen one or more RCS client receivers corresponding to the RCS service message according to the first information, and push the RCS service message only to one or more RCS client receivers within the pushing range.

The first information includes at least one of the following: geographical location information, registration time, and consumption record.

The RCS service message includes at least one of the following: a group chat message and an official account message.

The pushing module 82 is configured to:
screen, according to the first information, one or more RCS client receivers corresponding to the RCS service message, and push the RCS service message only to one or more RCS client receivers within the pushing range, including:
search, in a database, for the first information of one or more RCS client receivers corresponding to the RCS service message;
determine one or more RCS client receivers within the pushing range according to the first information of the one or more RCS client receivers corresponding to the RCS service message; and
push the RCS service message only to the one or more RCS client receivers within the pushing range.

The pushing module 82 is further configured to:
acquire the first information of the RCS client sender from the database, and determine the pushing range according to the first information of the RCS client sender and an error range.

The present disclosure provides an RCS client, including: a memory, a processor and a computer program stored in the memory and executable on the processor, wherein the processor, when executing the computer program, is configured to implement the method for sending an RCS service message.

The embodiments of the present disclosure provide an RCS AS, including: a memory, a processor and a computer program stored in the memory and executable on the processor, wherein the processor, when executing the computer program, is configured to implement the method for sending an RCS service message.

The present disclosure provides a computer-readable storage medium, which stores computer-executable instructions for implementing the method for sending an RCS service message.

The storage medium may include, but is not limited to, any medium that can store program codes, such as a USB flash disk, a ROM (Read-Only Memory), a RAM (Random Access Memory), a removable hard disk, a magnetic disk, or an optical disk.

Those having ordinary skill in the art can appreciate that all or some of the operations of the method and the functional blocks/units in the system and device disclosed above can be implemented as software, firmware, hardware, and any suitable combination thereof. In a hardware implementation, the division between functional modules/units referred to in the above description does not necessarily correspond to the division of physical components. For example, one physical component may have multiple functions, or one function or operation may be cooperatively performed by several physical components. Some or all components may be implemented as software executed by a processor, such as a digital signal processor or microprocessor, or as hardware, or as an integrated circuit, such as an application specific integrated circuit. Such software may be distributed on a computer-readable medium, which may include a computer storage medium (or a non-transitory medium) and a communication medium (or a transitory medium). As is well known to those having ordinary skill in the art, the term computer storage medium includes both volatile and nonvolatile, removable and non-removable medium implemented in any method or technology for storage of information such as computer-readable instructions, data structures, program modules, or other data. Computer storage medium includes, but is not limited to, RAM, ROM, EEPROM, flash memory or other memory technology, CD-ROM, DVD or other optical disk storage, magnetic cassettes, magnetic tape, magnetic disk storage or other magnetic storage devices, or any other medium which can be used to store the desired information and which can be accessed by a computer. In addition, communication medium typically embodies computer-readable instructions, data structures, program modules, or other data in a modulated data signal such as a carrier wave or other transport mechanism and may include any information delivery medium as is known to those having ordinary skill in the art.

## Claims

1. A method for sending a Rich Communication Suite, RCS, service message, comprising:
reporting (101), by an RCS client, first information to an RCS system, wherein the first information is used for defining a pushing range of an RCS service message; and
sending (102), by the RCS client, an RCS service message carrying indication information to an RCS Application Server, AS, wherein the indication information is used for indicating to push the RCS service message according to the first information, wherein sending (102), by the RCS client, the RCS service message carrying the indication information to the RCS AS comprises:
sending, by the RCS client in a case of determining that an option of pushing the RCS service message according to the first information has been activated, the RCS service message carrying the indication information.

2. The method according to claim 1, wherein
the first information comprises at least one of the following: geographical location information, registration time and consumption record; and
the RCS service message comprises at least one of the following: a group chat message and an official account message.

3. The method according to claim 1, wherein before reporting (101), by the RCS client, the first information, the method further comprises:
periodically acquiring, by the RCS client, the first information of the RCS client.

4. The method according to claim 3, wherein the first information comprises geographical location information, and periodically acquiring, by the RCS client, the first information of the RCS client comprises:
periodically acquiring, by the RCS client, longitude and latitude data of the RCS client, and converting, by the RCS client, the longitude and latitude data into the geographical location information in a decimal format.

5. The method according to claim 1, wherein reporting (101), by the RCS client, the first information comprises:
reporting, by the RCS client, the first information to an address book periodically in a case of determining that a switch for reporting the first information has been turned on.

6. A method for sending a Rich Communication Suite, RCS, service message, comprising:
receiving (201), by an RCS Application Server, AS, an RCS service message from an RCS client sender, wherein the RCS service message carries indication information, the indication information is used for indicating to push the RCS service message according to first information, and the first information is used for defining a pushing range of the RCS service message; and
screening (202), by the RCS AS, one or more RCS client receivers corresponding to the RCS service message according to the first information, and pushing, by the RCS AS, the RCS service message only to one or more RCS client receivers within the pushing range, wherein when the RCS client determines that an option of pushing the RCS service message according to the first information has been activated, receiving, by the RCS AS, an RCS service message carrying the indication information sent by the RCS client.

7. The method according to claim 6, wherein
the first information comprises at least one of the following: geographical location information, registration time and consumption record;
the RCS service message comprises at least one of the following: a group chat message and an official account message.

8. The method according to claim 6, wherein screening (202), by the RCS AS, one or more RCS client receivers corresponding to the RCS service message according to the first information, and pushing, by the RCS AS, the RCS service message only to one or more RCS client receivers within the pushing range comprises:
searching (301), in a database by the RCS AS, for the first information of the one or more RCS client receivers corresponding to the RCS service message;
determining (302), by the RCS AS, the one or more RCS client receivers within the pushing range according to the first information of the one or more RCS client receivers corresponding to the RCS service message; and
pushing (303), by the RCS AS, the RCS service message only to the one or more RCS client receivers within the pushing range.

9. The method according to claim 8, further comprising:
acquiring, by the RCS AS, the first information of the RCS client sender from the database, and determining, by the RCS AS, the pushing range according to the first information of the RCS client sender and an error range.

10. A device for sending a Rich Communication Suite, RCS, service message, applied to an RCS client, comprising:
a reporting module (71), configured to report first information to an RCS system, wherein the first information is used for defining a pushing range of an RCS service message; and
a sending module (72), configured to send an RCS service message carrying indication information to an RCS Application Server, AS, wherein the indication information is used for indicating to push the RCS service message according to the first information, wherein the sending module is further to send by the RCS client in a case of determining that an option of pushing the RCS service message according to the first information has been activated, the RCS service message carrying the indication information.

11. A device for receiving a Rich Communication Suite, RCS, service message, applied to an RCS Application Server, AS, comprising:
a receiving module (81), configured to receive an RCS service message from an RCS client sender, wherein the RCS service message carries indication information, the indication information is used for indicating to push the RCS service message according to first information, and the first information is used for defining a pushing range of the RCS service message; and
a pushing module (82), configured to screen one or more RCS client receivers corresponding to the RCS service message according to the first information, and push the RCS service message only to one or more RCS client receivers within the pushing range; wherein the receiving module is further configured to receive an RCS service message carrying the indication information sent by the RCS client, when the RCS client determines that an option of pushing the RCS service message according to the first information has been activated.

12. A Rich Communication Suite, RCS, client, comprising: a memory, a processor and a computer program stored in the memory and executable on the processor, wherein the processor, when executing the computer program, is configured to implement the method for sending an RCS service message according to any one of claims 1 to 5.

13. A Rich Communication Suite, RCS, AS, comprising: a memory, a processor and a computer program stored in the memory and executable on the processor, wherein the processor, when executing the computer program, is configured to implement the method for sending an RCS service message according to any one of claims 6 to 9.

14. A computer-readable storage medium, storing computer-executable instructions, wherein the computer-executable instructions are used for implementing the method for sending an RCS service message according to any one of claims 1 to 9.

## Patentansprüche

1. Verfahren zum Senden einer Rich-Communication-Suite-Dienstnachricht, RCS-Dienstnachricht, umfassend:
Melden (101), durch einen RCS-Client, von ersten Informationen an ein RCS-System, wobei die ersten Informationen zum Definieren eines Pushing-Bereichs einer RCS-Dienstnachricht verwendet werden; und
Senden (102), durch den RCS-Client, einer RCS-Dienstnachricht, die Angabeinformationen an einen RCS-Anwendungsserver, AS, trägt, wobei die Angabeinformationen zum Angeben, die RCS-Dienstnachricht gemäß den ersten Informationen zu pushen, verwendet werden, wobei das Senden (102), durch den RCS-Client, der RCS-Dienstnachricht, die die Angabeinformationen an den RCS-AS trägt, umfasst:
Senden, durch den RCS-Client in einem Fall eines Bestimmens, dass eine Option zum Pushen der RCS-Dienstnachricht gemäß den ersten Informationen aktiviert wurde, der RCS-Dienstnachricht, die die Angabeinformationen trägt.

2. Verfahren nach Anspruch 1, wobei
die ersten Informationen mindestens eines von dem Folgenden umfassen: geografische Standortinformationen, Registrierungszeit und Verbrauchssatz; und
die RCS-Dienstnachricht mindestens eines von dem Folgenden umfasst: eine Nachricht eines Gruppenchats und eine Nachricht eines offiziellen Accounts.

3. Verfahren nach Anspruch 1, wobei, vor dem Melden (101), durch den RCS-Client, der ersten Informationen, das Verfahren ferner umfasst:
periodisches Erfassen, durch den RCS-Client, der ersten Informationen des RCS-Clients.

4. Verfahren nach Anspruch 3, wobei die ersten Informationen geografische Standortinformationen umfassen und das periodische Erfassen, durch den RCS-Client, der ersten Informationen des RCS-Clients umfasst:
periodisches Erfassen, durch den RCS-Client, von Längengrad- und Breitengraddaten des RCS-Clients, und Umwandeln, durch den RCS-Client, der Längengrad- und Breitengraddaten in die geografischen Standortinformationen in einem Dezimalformat.

5. Verfahren nach Anspruch 1, wobei das Melden (101), durch den RCS-Client, der ersten Informationen umfasst:
periodisches Melden, durch den RCS-Client, der ersten Informationen an ein Adressbuch in einem Fall des Bestimmens, dass ein Switch zum Melden der ersten Informationen eingeschaltet wurde.

6. Verfahren zum Senden einer Rich-Communication-Suite-Dienstnachricht, RCS-Dienstnachricht, umfassend:
Empfangen (201), durch einen RCS-Anwendungsserver, AS, einer RCS-Dienstnachricht von einem RCS-Client-Sender, wobei die RCS-Dienstnachricht Angabeinformationen trägt, wobei die Angabeinformationen zum Angeben, die RCS-Dienstnachricht gemäß ersten Informationen zu pushen, verwendet werden und die ersten Informationen zum Definieren eines Pushing-Bereichs der RCS-Dienstnachricht verwendet werden; und
Überprüfen (202), durch den RCS-AS, eines oder mehrerer RCS-Client-Empfänger, die der RCS-Dienstnachricht gemäß den ersten Informationen entsprechen, und Pushen, durch den RCS-AS, der RCS-Dienstnachricht nur an einen oder mehrere RCS-Client-Empfänger innerhalb des Pushing-Bereichs, wobei, wenn der RCS-Client bestimmt, dass eine Option zum Pushen der RCS-Dienstnachricht gemäß den ersten Informationen aktiviert wurde, Empfangen, durch den RCS-AS, einer RCS-Dienstnachricht, die die Angabeinformationen, die durch den RCS-Client gesendet werden, trägt.

7. Verfahren nach Anspruch 6, wobei
die ersten Informationen mindestens eines von dem Folgenden umfassen: geografische Standortinformationen, Registrierungszeit und Verbrauchssatz;
die RCS-Dienstnachricht mindestens eines von dem Folgenden umfasst: eine Nachricht des Gruppenchats und eine Nachricht des offiziellen Accounts.

8. Verfahren nach Anspruch 6, wobei das Überprüfen (202), durch den RCS-AS, eines oder mehrerer RCS-Client-Empfänger, die der RCS-Dienstnachricht gemäß den ersten Informationen entsprechen, und das Pushen, durch den RCS-AS, der RCS-Dienstnachricht nur an einen oder mehrere RCS-Client-Empfänger innerhalb des Pushing-Bereichs umfasst:
Suchen (301), in einer Datenbank durch den RCS-AS, nach den ersten Informationen des einen oder der mehreren RCS-Client-Empfänger, die der RCS-Dienstnachricht entsprechen;
Bestimmen (302), durch den RCS-AS, des einen oder der mehreren RCS-Client-Empfänger innerhalb des Pushing-Bereichs gemäß den ersten Informationen des einen oder der mehreren RCS-Client-Empfänger, die der RCS-Dienstnachricht entsprechen; und
Pushen (303), durch den RCS-AS, der RCS-Dienstnachricht nur an den einen oder die mehreren RCS-Client-Empfänger innerhalb des Pushing-Bereichs.

9. Verfahren nach Anspruch 8, ferner umfassend:
Erfassen, durch den RCS-AS, der ersten Informationen des RCS-Client-Senders von der Datenbank und Bestimmen, durch den RCS-AS, des Pushing-Bereichs gemäß den ersten Informationen des RCS-Client-Senders und eines Fehlerbereichs.

10. Vorrichtung zum Senden einer Rich-Communication-Suite-Dienstnachricht, RCS-Dienstnachricht, die auf einen RCS-Client angewendet wird, umfassend:
ein Meldemodul (71), das konfiguriert ist, um erste Informationen an ein RCS-System zu melden, wobei die ersten Informationen zum Definieren eines Pushing-Bereichs einer RCS-Dienstnachricht verwendet werden; und
ein Sendemodul (72), das konfiguriert ist, um eine RCS-Dienstnachricht, die Angabeinformationen trägt, an einen RCS-Anwendungsserver, AS, zu senden, wobei die Angabeinformationen zum Angeben, die RCS-Dienstnachricht gemäß den ersten Informationen zu pushen, verwendet werden, wobei das Sendemodul ferner dazu dient, durch den RCS-Client in einem Fall des Bestimmens, dass eine Option zum Pushen der RCS-Dienstnachricht gemäß den ersten Informationen aktiviert wurde, die RCS-Dienstnachricht, die die Angabeinformationen trägt, zu senden.

11. Vorrichtung zum Empfangen einer Rich-Communication-Suite-Dienstnachricht, RCS-Dienstnachricht, die auf einen RCS-Anwendungsserver, AS, angewendet wird, umfassend:
ein Empfangsmodul (81), das konfiguriert ist, um eine RCS-Dienstnachricht von einem RCS-Client-Sender zu empfangen, wobei die RCS-Dienstnachricht Angabeinformationen trägt, wobei die Angabeinformationen zum Angeben, die RCS-Dienstnachricht gemäß den ersten Informationen zu pushen, verwendet werden und die ersten Informationen zum Definieren eines Pushing-Bereichs der RCS-Dienstnachricht verwendet werden; und
ein Pushing-Modul (82), das konfiguriert ist, um einen oder mehrere RCS-Client-Empfänger, die der RCS-Dienstnachricht entsprechen, gemäß den ersten Informationen zu überprüfen und die RCS-Dienstnachricht nur an einen oder mehrere RCS-Client-Empfänger innerhalb des Pushing-Bereichs zu pushen; wobei das Empfangsmodul ferner konfiguriert ist, um eine RCS-Dienstnachricht zu empfangen, die die Angabeinformationen, die durch den RCS-Client gesendet werden, trägt, wenn der RCS-Client bestimmt, dass eine Option zum Pushen der RCS-Dienstnachricht gemäß den ersten Informationen aktiviert wurde.

12. Rich-Communication-Suite-Client, RCS-Client, umfassend: ein Memory, einen Prozessor und ein Computerprogramm, das in dem Memory gespeichert und auf dem Prozessor ausführbar ist, wobei der Prozessor, wenn das Computerprogramm ausgeführt wird, konfiguriert ist, um das Verfahren zum Senden einer RCS-Dienstnachricht nach einem der Ansprüche 1 bis 5 zu implementieren.

13. Rich-Communication-Suite-AS, RCS-AS, umfassend: ein Memory, einen Prozessor und ein Computerprogramm, das in dem Memory gespeichert und auf dem Prozessor ausführbar ist, wobei der Prozessor, wenn das Computerprogramm ausgeführt wird, konfiguriert ist, um das Verfahren zum Senden einer RCS-Dienstnachricht nach einem der Ansprüche 6 bis 9 zu implementieren.

14. Computerlesbares Speichermedium, das computerausführbare Anweisungen speichert, wobei die computerausführbaren Anweisungen zum Implementieren des Verfahrens zum Senden einer RCS-Dienstnachricht nach einem der Ansprüche 1 bis 9 verwendet werden.

## Revendications

1. Procédé permettant d'envoyer un message de service de Communication Enrichie, RCS, comprenant :
le fait de rapporter (101), par un client RCS, des premières informations à un système RCS, les premières informations étant utilisées pour définir une plage de poussée d'un message de service RCS ; et
l'envoi (102), par le client RCS, d'un message de service RCS portant des informations d'indication à un serveur d'applications, AS RCS, les informations d'indication étant utilisées pour indiquer de pousser le message de service RCS selon les premières informations, l'envoi (102), par le client RCS, du message de service RCS portant les informations d'indication à l'AS RCS comprenant :
l'envoi, par le client RCS en cas de détermination qu'une option de poussée du message de service RCS selon les premières informations a été activée, du message de service RCS portant les informations d'indication.

2. Procédé selon la revendication 1, dans lequel
les premières informations comprennent au moins l'un de ce qui suit : informations de localisation géographique, moment d'inscription et enregistrement de consommation ; et
le message de service RCS comprend au moins l'un de ce qui suit : un message de conversation de groupe et un message de compte officiel.

3. Procédé selon la revendication 1, avant le rapport (101), par le client RCS, des premières informations, le procédé comprenant en outre :
l'acquisition périodique, par le client RCS, des premières informations du client RCS.

4. Procédé selon la revendication 3, dans lequel les premières informations comprennent des informations de localisation géographique, et l'acquisition périodique, par le client RCS, des premières informations du client RCS comprend :
l'acquisition périodique, par le client RCS, de données de longitude et de latitude du client RCS, et la conversion, par le client RCS, des données de longitude et de latitude en les informations de localisation géographique dans un format décimal.

5. Procédé selon la revendication 1, dans lequel le rapport (101), par le client RCS, des premières informations comprend :
le rapport périodique, par le client RCS, des premières informations vers un carnet d'adresses dans un cas où l'on détermine qu'un commutateur permettant de rapporter les premières informations a été activé.

6. Procédé permettant d'envoyer un message de service de communication enrichie, RCS, comprenant :
la réception (201), par un serveur d'applications, AS, RCS d'un message de service RCS provenant d'un expéditeur client RCS, le message de service RCS portant des informations d'indication, les informations d'indication étant utilisées pour indiquer de pousser le message de service RCS selon des premières informations, et les premières informations étant utilisées pour définir une plage de poussée du message de service RCS ; et
le criblage (202), par l'AS RCS, d'un ou plusieurs récepteurs clients RCS correspondant au message de service RCS selon les premières informations, et la poussée, par l'AS RCS, du message de service RCS uniquement vers un ou plusieurs récepteurs clients RCS au sein de la plage de poussée, dans lequel lorsque le client RCS détermine qu'une option de poussée du message de service RCS selon les premières informations a été activée, on reçoit, par l'AS RCS, un message de service RCS portant les informations d'indication, envoyé par le client RCS.

7. Procédé selon la revendication 6, dans lequel
les premières informations comprennent au moins l'un de ce qui suit : informations de localisation géographique, moment d'inscription et enregistrement de consommation ;
le message de service RCS comprend au moins l'un de ce qui suit : un message de conversation de groupe et un message de compte officiel.

8. Procédé selon la revendication 6, dans lequel le criblage (202), par l'AS RCS, d'un ou plusieurs récepteurs clients RCS correspondant au message de service RCS selon les premières informations, et la poussée, par l'AS RCS, du message de service RCS uniquement vers un ou plusieurs récepteurs clients RCS au sein de la plage de poussée comprend :
la recherche (301), dans une base de données par l'AS RCS, des premières informations du ou des récepteurs clients RCS correspondant au message de service RCS ;
la détermination (302), par l'AS RCS, du ou des récepteurs clients RCS au sein de la plage de poussée selon les premières informations du ou des récepteurs clients RCS correspondant au message de service RCS ; et
la poussée (303), par l'AS RCS, du message de service RCS uniquement vers le ou les récepteurs clients RCS au sein de la plage de poussée.

9. Procédé selon la revendication 8, comprenant en outre :
l'acquisition, par l'AS RCS, des premières informations de l'expéditeur client RCS auprès de la base de données, et la détermination, par l'AS RCS, de la plage de poussée selon les premières informations de l'expéditeur client RCS et une plage d'erreur.

10. Dispositif permettant d'envoyer un message de service de communication enrichie, RCS, appliqué à un client RCS, comprenant :
un module de rapport (71), configuré pour rapporter des premières informations à un système RCS,
les premières informations étant utilisées pour définir une plage de poussée d'un message de service RCS ; et
un module d'envoi (72), configuré pour envoyer un message de service RCS portant des informations d'indication à un serveur d'applications, AS RCS, les informations d'indication étant utilisées pour indiquer de pousser le message de service RCS selon les premières informations, le module d'envoi permettant en outre d'envoyer par le client RCS dans un cas où l'on détermine qu'une option de poussée du message de service RCS selon les premières informations a été activée, le message de service RCS portant les informations d'indication.

11. Dispositif permettant de recevoir un message de service de communication enrichie, RCS, appliqué à un serveur d'applications, AS RCS comprenant :
un module de réception (81), configuré pour recevoir un message de service RCS provenant d'un expéditeur client RCS, le message de service RCS portant des informations d'indication, les informations d'indication étant utilisées pour indiquer de pousser le message de service RCS selon des premières informations, et les premières informations étant utilisées pour définir une plage de poussée du message de service RCS ; et
un module de poussée (82), configuré pour cribler un ou plusieurs récepteurs clients RCS correspondant au message de service RCS selon les premières informations, et pousser le message de service RCS uniquement vers un ou plusieurs récepteurs clients RCS au sein de la plage de poussée ; le module de réception étant configuré en outre pour recevoir un message de service RCS portant les informations d'indication, envoyé par le client RCS, lorsque le client RCS détermine qu'une option de poussée du message de service RCS selon les premières informations a été activée.

12. Client d'une suite de communication enrichie, client RCS, comprenant : une mémoire, un processeur et un programme d'ordinateur stocké dans la mémoire et exécutable sur le processeur, le processeur, lors de l'exécution du programme d'ordinateur, étant configuré pour implémenter le procédé permettant d'envoyer un message de service RCS selon l'une quelconque des revendications 1 à 5.

13. AS d'une suite de communication enrichie, AS RCS, comprenant : une mémoire, un processeur et un programme d'ordinateur stocké dans la mémoire et exécutable sur le processeur, le processeur, lors de l'exécution du programme d'ordinateur, étant configuré pour implémenter le procédé permettant d'envoyer un message de service RCS selon l'une quelconque des revendications 6 à 9.

14. Support de stockage lisible par ordinateur, stockant des instructions exécutables par ordinateur, les instructions exécutables par ordinateur étant utilisées pour implémenter le procédé permettant d'envoyer un message de service RCS selon l'une quelconque des revendications 1 à 9.
